# EUROPEAN PATENT SPECIFICATION

(11) **EP 1 885 783 B1**
(45) Date of publication and mention of the grant of the patent: **09.12.2009**
(21) Application number: 06724564.7
(22) Date of filing: 25.04.2006
(51) Int. Cl.: C08K 5/00, C08L 23/06

(54) **STABILIZED CROSS-LINKED POLYOLEFIN COMPOSITIONS**
STABILISIERTE VERNETZTE POLYOLEFINZUSAMMENSETZUNGEN
COMPOSITIONS POLYOLEFINIQUES RETICULEES STABILISEES

(30) Priority: 26.04.2005 GB 0508350
(43) Date of publication of application: 13.02.2008
(73) Proprietor: Chemtura Europe GmbH, 8500 Frauenfeld (CH)
(72) Inventor: PRINS, Anne-Marie, B-3201 Langdorp (BE); KECK-ANTOINE, Klaus, B-1090 Jette-Bruxelles (BE); HILL, Jonathan Simon, Flixton Manchester M41 5GR (GB); BAYER, Joachim, 78467 Konstanz (DE); JOHNSON, Brian W., B-2440 Geel (BE)
(74) Representative: Serravalle, Marco
(86) International application number: PCT/EP2006/003827
(87) International publication number: WO 2006/114283

(56) References cited:
- EP-A- 0 113 914
- EP-A- 1 249 845
- US-B1- 6 187 858

## Description

### BACKGROUND OF THE INVENTION

### 1. Field of the invention

The present invention relates to stabilized cross-linked polyolefin compositions. More particularly, the present invention relates to stabilized peroxide cross-linked low density polyolefin compositions useful in the preparation of insulating and semi-conductive layers for electrical cables, preferably medium or high voltage electrical cables.

### 2. Description of Related Art

Insulation compositions, particularly those for medium and high voltage power cables generally include a polyethylene and additives. These additives often include a peroxide cross-linking agent, antioxidants, and, optionally, various other additives, such as lubricating additives, additives for water tree resistance, and cure boosters. Cross-linking assists the polymer in meeting mechanical and physical requirements, such as improved thermal aging and reduced deformation under pressure. However, polymers containing peroxides are vulnerable to scorch, i.e., premature cross-linking occurring during the polymer extrusion process. Scorch causes the formation of discolored gel-like particles in the resin and leads to an undesired built up of extruder pressure during extrusion.

A good stabilizer package for peroxide cross-linked polyethylene for medium and high voltage cable insulation should protect the polymer against the aforementioned scorch during cable extrusion and provide long term stability after the cable has been produced. Scorch causes the formation of discolored gel-like particles in the resin and leads to an undesired built up of extruder pressure during extrusion. Additionally, the cable quality would be negatively affected.

Consequently, a suitable stabilizer system should provide low scorch (hereinafter referred to as "requirement 1").

In addition to protection from scorch, the stabilizer system has an additional function. After the cable is produced, it is in service for an extended period of time (service life; long term stability). Often, the service life exceeds the intrinsic maximum stability of the polymer. Consequently, stabilizers need to be added in order to assure a suitable service life (hereinafter, "requirement 2").

In contrast to requirement 1, during the cross-linking step, the interaction of the stabilizer with the peroxide should be as low as possible to ensure an optimum cross-link density resulting in optimal mechanical properties. Cross-linking assists the polymer in meeting mechanical and physical requirements, such as improved thermal aging and reduced deformation under pressure. Consequently, the stabilizer system, while suppressing scorch during the compounding step (and counteracting the effect of peroxides), should show interactions with the peroxide in a later stage of the cable manufacturing process that are as low as possible (hereinafter, "requirement 3"). An excess of organic peroxide may be used to achieve the desired level of cure, but, as described in EP 1088851, this leads to a problem known as sweat out. Sweat out dust is an explosion hazard, may foul filters, and causes slippage and instability in the extrusion process.

Other properties, such as the solubility of the antioxidant in the polymer matrix, are also important. A high solubility of the antioxidants ensures a low level of blooming. Blooming may result in the generation of dust on the pellets. This could be a negative from a health and environmental point of view. Additionally, additives that bloomed to the surface might physically be lost and become unavailable in the polymer matrix for their intended purpose. Consequently, a suitable stabilizer package should have sufficient solubility with the polymer matrix (hereinafter, "requirement 4").

Further, a low enough melting point is required. A low melting point ensures a good dispersion of the antioxidant in the polymer matrix. Insufficient dispersion will lead to decreased performance of the additive in the polymer matrix. An additive with a melting point above the maximum processing temperature of the polymer (determined by the peroxide) would result in a very poor dispersion of the additive in the polymer matrix. This is considered a substantial drawback. The most appropriate way to incorporate additives into the polymer would be in a liquid form. While the stabilizer system does not necessarily need to be a liquid at room temperature, it needs to melt at a low enough temperature to be easily melted, filtered, and added to the polymer in a liquid form. A liquid addition will have a further advantage in that the additive can be filtered, thereby increasing cleanliness. Increased cleanliness of the additive would further improve the cable quality. Consequently, a low enough melting behavior of the stabilizer system is a further requirement (hereinafter, "requirement 5").

In summary, at least five basic requirements have to be fulfilled by a suitable stabilizer or stabilizer system:

| | |
|---|---|
| Requirement 1: | High level of anti-scorch |
| Requirement 2: | Good long term stability |
| Requirement 3: | Low level of peroxide interaction |
| Requirement 4: | High solubility (low blooming) |
| Requirement 5: | Low melting behavior |

Additional requirements might need to be met, e.g., water tree resistance or dielectric strength.

However, requirement 1 is nearly the opposite of requirement 3. The consequence of requirements 4 and 5 must be considered a further severe narrowing of those stabilizer and stabilizer systems that would either match requirement 1 or requirement 3.

In consequence, usually a compromise has to be made and one of the above requirements is not met sufficiently by a single stabilizer. Moreover, it has to be noted that, owing to the complexity of the various requirements, it is impossible to predict the performance profile of stabilizer systems comprised of two or more individual stabilizers.

Known types of stabilizers include sterically hindered phenols, aromatic amines, organic phosphates, and thiocompounds.

Currently, peroxide cross-linked polyethylene for wire and cable purposes is stabilized predominantly by a single stabilizer approach, more particularly, a stabilizer with combined phenol and sulphur functionality (e.g. 4,4'-thiobis (2-t-butyl-5-methylphenol). Alternatively, such cross-linked polyethylene is stabilized by a two component system having a highly hindered phenol and a thiosynergist (sulphur containing compound), e.g., 2,2'-thiodiethylene bis[3(3,5-di-butyl-4-hydroxyphenyl)propionate], distearyl 3,3'-thiopropionate, and di(tridecyl) thiodipropionate.

4,4'-Thiobis (2-t-butyl-5-methylphenol) provides excellent protection against scorch and ensures good long term stability of the cable. It also gives limited interaction with the peroxide cross-linking process ensuring a high cross-link density. Thus, it provides a very good combination of high anti-scorch, good long term stability, and limited peroxide interaction. It is usually added between 0.1 and 0.5%, depending upon the end use requirements. However, the solubility of 4,4'-thiobis (2-t-butyl-5-methylphenol) is limited in polyethylene, and at higher load levels it tends to be partially sweated out. In addition, 4,4'-thiobis (2-t-butyl-5-methylphenol) has a high melting point. It is so high that it does not melt during subsequent cable extrusion and cross-linking of the polyethylene compound, so it may cause inhomogeneities in the cable. The balance of properties relating to requirements 1, 2, and 3 should be considered as very suitable for the intended use. It is therefore used in the following as bench mark to quantify requirements 1, 2, and 3. Although 4,4'-thiobis (2-t-butyl-5-methylphenol) shows a very suitable balance of requirements 1, 2, and 3, it does not fulfill requirements 4 and 5.

WO 00/02207 discloses that peroxide cross-linked polyethylene as insulating layer for wire and cable purposes can be stabilized by a two component system based on 2,2'-thiodiethylene bis[3(3,5-di-t-butyl-4-hydroxyphenyl)propionate] (Anox 70) and distearyl 3,3'-thiopropionate (DSTDP), usually at a total loading of about 0.4% total in a 1:1 ratio. This stabilizer system overcomes the problem of blooming (requirement 4), but it performs insufficiently in anti-scorch and provides poorer long term stability of the cable. Thus, this stabilizer system does not match requirements 1 and 2.

There is a clear need in industry for a tailor-made two, three, or more component stabilized system that would optimize the desired properties and would be a much needed improvement over currently available stabilizing systems.

U.S. Patent No. 3,954,907 discloses that vulcanizable ethylene polymer-based compositions, which are susceptible to scorching when processed at elevated temperatures, prior to vulcanization, in the presence of certain organic peroxide compounds, can be protected against such scorching by the incorporation therein of monomeric vinyl compounds having a defined structure.

U.S. Patent No. 5,530,072 discloses a process that is said to improve the modification efficiency of peroxides through the proper selection of anti-oxidant additives and extrusion environment.

U.S. Patent No. 6,103,374 (EP 0965999 A1) discloses a composition comprising: (a) polyolefin; (b) as a scorch inhibitor, 4,4'-thiobis(2-methyl-6-t-butyl phenol); 2,2-thiobis(6-t-butyl-4-methylphenol); or mixtures thereof; (c) hydroquinone; a substituted hydroquinone; or mixtures thereof in an amount sufficient to control color formation; and (d) an organic peroxide.

U.S. Patent No. 6,180,231 (EP 1041582) discloses a composition comprising: (a) polyethylene; (b) as a first scorch inhibitor, a substituted hydroquinone or 4,4'-thiobis(2-t-butyl-5-methyl phenol); (c) as a second scorch inhibitor, distearyl disulfide; and (d) an organic peroxide.

U.S. Patent No. 6,180,706 (EP 0965998 A1) discloses a composition comprising: (a) a low density homopolymer of ethylene prepared by a high pressure process; (b) a scorch inhibitor selected from the group consisting of a substituted hydroquinone; 4,4'-thiobis(2-methyl-6-t-butylphenol); 2,2'-thiobis(6-t-butyl-4-methylphenol); and 4,4'-thiobis(2-t-butyl-5-methylphenol) in an amount of about 0.02 to about 0.07 part by weight of scorch inhibitor per 100 parts by weight of homopolymer; (c) a cure booster; and (d) an organic peroxide.

U.S. Patent No. 6,187,858 discloses a composition comprising: (a) polyethylene; (b) as a first antioxidant, a thiobisphenol; (c) as a second antioxidant, a compound containing 3-(3,5-di-t-butyl-4-hydroxyphenyl)propionate in the molecule; (d) as a third antioxidant, distearyl thiodipropionate; and (e) an organic peroxide, with the proviso that each antioxidant is present in an amount of about 0.01 to the about 0.2 part by weight and the organic peroxide is present in an amount of about 0.5 to about 3 parts by weight, all per 100 parts by weight of polyethylene.

U.S. Patent No. 6,191,230 discloses a masterbatch composition comprising: (a) a copolymer of ethylene and 1-octene prepared with a metallocene catalyst; (b) as a scorch inhibitor, a substituted hydroquinone; 4,4'-thiobis(2-methyl-6-t-butylphenol); 4,4'-thiobis(2-t-butyl-5-methylphenol); or mixtures thereof; (c) as a cure booster, triallyl trimellitate; 3,9-divinyl-2,4,8,10-tetra-oxaspiro[5.5]undecane; triallylcyanurate; triallyl isocyanurate; or mixtures thereof; and (d) an organic peroxide.

U.S. Patent No. 6,869,995 discloses a composition comprising:
(i) polyethylene, and, based on 100 parts by weight of component (i),
(ii) about 0.3 to about 0.6 part by weight of 4,4'-thiobis(2-methyl-6-t-butylphenol); 4,4'-thiobis(2-t-butyl-5-methylphenol); 2,2'-thiobis(6-t-butyl-4-methylphenol); or a mixture of said compounds, and
(iii) about 0.4 to about 1 part by weight of a polyethylene glycol having a molecular weight in the range of about 1,000 to about 100,000.

U.S. Published Patent Application No. 2005/0148715 discloses a process for preparing a composition comprising the step of selecting a composition for preparing a moldable, test plaque having (1) a MDR ts1 at 150 degrees Celsius of at least about 20, (2) a MDR tsl at 140 degrees Celsius of at least about 50, (3) a retention of tensile strength of at least about 75% after two weeks of aging at 150 degrees Celsius, (4) a retention of elongation of at least about 75% after two weeks of aging at 150 degrees Celsius, (5) water tree resistance less than about 45%, and (6) sweatout of less than about 100 ppm of the thiobis phenolic antioxidant and (b) imparting water tree resistance to the insulation of cables, the composition comprising:
(i) polyethylene, and based on 100 parts by weight of component (i),
(ii) about 0.3 to about 0.6 part by weight of a thiobis phenolic antioxidant selected from the group consisting of 4,4'-thiobis(2-methyl-6- -t-butylphenol); 4,4'-thiobis(2-t-butyl-5-methylphenol); 2,2'-thiobis(6-t-butyl-4-methylphenol); or a mixture of said compounds; and
(iii) about 0.4 to about 1 part by weight of a polyethylene glycol having a molecular weight in the range of about 1000 to about 100,000.

EP 1074580 discloses the use of [1,3,5-tris(4-tert-butyl-3-hydroxy-2,6-dimethylbenzyl)-1,3,5-triazine-2,4,6-(1H,3H,5H)-trione] as a scorch inhibitor in the technical field of the preparation of cable insulation, semi-conductor shields, and jackets.

EP 1088851 discloses the use of α-tocopherol as a scorch inhibitor.

EP 1249845 discloses the use of 2,4-bis (n-octylthiomethyl)-6-methylphenol as an antioxidant for a peroxide crosslinked polyethylene composition used as insulating material for medium and high voltage cables.

EP 1249845 also discloses the combination of:
a polyethylene;
a scorch inhibitor having a melting point below 50°C at atmospheric pressure; and
an organic peroxide.
The use of 4,6-bis(octylthiomethyl)o-cresol, as a scorch inhibitor is disclosed along with other structurally related compounds.

JP 57-126833 discloses related compounds.

WO 00/02207 discloses peroxide cross-linked polyethylene as an insulating layer for wire and cable purposes that can be stabilized by a two component system based on 2,2'thiodiethylene bis[3(3,5-di-butyl-4-hydroxyphenyl)propionate] (II) and distearyl 3,3'-thiopropionate (III), usually at a total loading of about 0.4% total in a 1:1 ratio. It is also disclosed that a single stabilizer approach can be used, more particularly one with combined phenol and sulfur functionality, such as 4,4'-thiobis(2-t-butyl-5-methylphenol).

### SUMMARY OF THE INVENTION

As noted above, the present invention relates to stabilized cross-linked polyolefin compositions useful in the preparation of insulating and semi-conductive layers for electrical cables, preferably medium or high voltage electrical cables.

An object of the present invention is to provide a polyolefin composition, preferably a polyethylene composition, with an optimized combination of antioxidants that has an improved balance of properties being:

| | |
|---|---|
| Requirement 1: | High level of antiscorch |
| Requirement 2: | Good long term stability |
| Requirement 3: | Low level of peroxide interaction |
| Requirement 4: | High solubility (low blooming) |
| Requirement 5: | Low melting behavior |

Other objects and advantages of the invention will become apparent hereinafter.

It has now been found that disadvantages of antioxidants known in the art can be minimized, if not eliminated, by an improved blend of antioxidants. This constitutes a high level of technical progress considering the large number of additives available, the severe and partially opposing requirements, and the complexity of stabilizer interaction. Many

### GRLK-P173

antioxidant combinations are possible, but only a few can meet the desired combination of properties that are required for an insulating material for MV and HV power cable comprising, good anti-scorch, limited interaction with the peroxide during cross-linking, good long term stability, good solubility, a low melting point, and good color.

More particularly, the present invention is directed to a composition comprising:
(a) at least one polyolefin;
(b) at least one organic peroxide; and
(c) an antioxidant mixture of
   i) 100 to 5,000 ppm of at least one fast radical scavenger selected from the group consisting of α-tocopherol; 4,6-bis(octylthiomethyl) o-cresol and derivatives thereof; and mixtures thereof; and
   ii) 100 to 8,000 ppm of at least one long term stabilizer selected from the group consisting of 2,2'-thiodiethylene bis[3(3,5-di-t-butyl-4-hydroxyphenyl)propionate]; C₁₃-C₁₅ linear and branched alkyl esters of 3-(3',5'-di-t-butyl-4'-hydroxyphenyl)-propionic acid; distearyl 3,3'-thiopropionate; 4,4'-bis(α,α-dimethylbenzyl) diphenylamine; ADK stab AO 23^{™} (CAS N°66534-05-02, 11982-66-6); and mixtures thereof.

In another aspect, the present invention is directed to an article of manufacture comprising insulating material comprising a composition comprising:
(a) at least one polyolefin;
(b) at least one organic peroxide; and
(c) an antioxidant mixture of
   i) 100 to 5,000 ppm of at least one fast radical scavenger selected from the group consisting of α-tocopherol; 4,6-bis(octylthiomethyl) o-cresol and derivatives thereof; and mixtures thereof; and
   ii) 100 to 8,000 ppm of at least one long term stabilizer selected from the group consisting of 2,2'-thiodiethylene bis[3(3,5-di-t-butyl-4-hydroxyphenyl)propionate]; C₁₃-C₁₅ linear and branched alkyl esters of 3-(3',5'-di-t-butyl-4'-hydroxyphenyl)-propionic acid; distearyl 3,3'-thiopropionate; 4,4'-bis(α,α-dimethylbenzyl) diphenylamine; ADK stab AO 23^{™} (CAS N°66534-05-02, 11982-66-6); and mixtures thereof.

In still another aspect, the present invention is directed to a method for stabilizing polyolefins for use as insulating media in medium and high voltage wire and cable comprising adding to said polyolefin:
at least one organic peroxide; and
an antioxidant mixture of
   i) 100 to 5,000 ppm of at least one fast radical scavenger selected from the group consisting of α-tocopherol; 4,6-bis(octylthiomethyl) o-cresol and derivatives thereof; and mixtures thereof; and
   ii) 100 to 8,000 ppm of at least one long term stabilizer selected from the group consisting of 2,2'-thiodiethylene bis[3(3,5-di-t-butyl-4-hydroxyphenyl)propionate]; C₁₃-C₁₅ linear and branched alkyl esters of 3-(3',5'-di-t-butyl-4'-hydroxyphenyl)-propionic acid; distearyl 3,3'-thiopropionate; 4,4'-bis(α,α-dimethylbenzyl) diphenylamine; ADK stab AO 23^{™} (CAS N°66534-05-02, 11982-66-6); and mixtures thereof.

### DESCRIPTION OF THE PREFERRED EMBODIMENTS

As noted above, the present invention is directed to a composition comprising:
(a) at least one polyolefin;
(b) at least one organic peroxide; and
(c) an antioxidant mixture of
   i) 100 to 5,000 ppm of at least one fast radical scavenger selected from the group consisting of α-tocopherol; 4,6-bis(octylthiomethyl) o-cresol and derivatives thereof; and mixtures thereof; and
   ii) 100 to 8,000 ppm of at least one long term stabilizer selected from the group consisting of 2,2'-thiodiethylene bis[3(3,5-di-t-butyl-4-hydroxyphenyl)propionate]; C₁₃-C₁₅ linear and branched alkyl esters of 3-(3',5'-di-t-butyl-4'-hydroxyphenyl)-propionic acid; distearyl 3,3'-thiopropionate; 4,4'-bis(α,α-dimethylbenzyl) diphenylamine; ADK stab AO 23^{™} (CAS N°66534-05-02, 11982-66-6); and mixtures thereof.

Preferably, the polyolefin is a homopolymer or copolymer of ethylene. A good overview of the various polyethylene types is given in "Handbook of Polyethylene" by A. J. Peacock (Marcel Dekker Publishers, 2000). A more specific description of suitable polyethylenes is given in U.S. Published Patent Application No. 2005/0148715 A1 (page 2 [0017] to page 3 [0023]).

Preferably, the load level of fast radical scavenger(s), c(i), is 500 to 4,000 ppm, based on the weight of the polyolefin.

Preferably the load level of the long term stabilizer(s), c(ii), is 500 to 6,000 ppm, based on the weight of the polyolefin.

More preferably, the total load level of the mixture of antioxidants c(i) and c(ii) is in the range of 200 to 10,000 ppm, preferably 2,000 to 6,000 ppm, based on the weight of the polyolefin.

For a structure derived from 4,6-bis(octylthiomethyl)o-cresol, see EP 1249845 A2. The most preferred derivative is 2,4-bis (n-docecylthiomethyl)-6-methylphenol.

Another preferred embodiment of the invention is a composition comprising the fast radical scavenger 4,6-bis(octylthiomethyl)o-cresol blended with the long term stabilizer 2,2'-thiodiethylene bis[3(3,5-di-t-butyl-4-hydroxyphenyl)propionate].

Another preferred embodiment of the invention is a composition comprising the fast radical scavenger 4,6-bis(octylthiomethyl)o-cresol blended with a long term stabilizing mixture comprising 2,2'-thiodiethylene bis[3(3,5-di-t-butyl-4-hydroxyphenyl)propionate] and distearyl 3,3'-thiopropionate or ditridecyl thiodipropionate.

Another preferred embodiment of the invention is a composition comprising the fast radical scavenger 4,6-bis(octylthiomethyl)o-cresol blended with a long term stabilizer that comprises C₁₃-C₁₅ linear and branched alkyl esters of 3-(3',5'-di-t-butyl-4'-hydroxyphenyl) propionic acid.

Another preferred embodiment of the invention is a composition comprising the fast radical scavenger 4,6-bis(octylthiomethyl)o-cresol blended with a long term stabilizer comprising a mixture of C₁₃-C₁₅ linear and branched alkyl esters of 3-(3',5'-di-t-butyl-4'-hydroxyphenyl) propionic acid and distearyl 3,3'-thiopropionate or ditridecyl thiodipropionate.

Another preferred embodiment of the invention is a composition comprising the fast radical scavenger 4,6-bis(octylthiomethyl)o-cresol blended with a long term stabilizer selected from the group consisting of propanoic acid, 3-(tetradecylthio)-, thiobis[2,-(1,1-dimethylethyl)-5-methyl-4,1-phenylene] ester or propanoic acid, 3-(dodecylthio)-, thiobis[2,-(1,1-dimethylethyl)-5-methyl-4,1-phenylene]ester, and mixtures thereof (ADK stab AO 23 (CAS number 66534-05-2, 71982-66-6)).

Another preferred embodiment of the invention is a composition comprising the fast radical scavenger 4,6-bis(octylthiomethyl)o-cresol a long term stabilizer selected from the group consisting of propanoic acid, 3-(tetradecylthio)-,thiobis[2,-(1,1-dimethylethyl)-5-methyl-4,1-phenylene] ester or propanoic acid, 3-(dodecylthio)-, thiobis[2,-(1,1-dimethylethyl-5-methyl-4,1-phenylene]ester, and mixtures thereof (ADK stab AO 23) blended with distearyl 3,3'-thiopropionate or ditridecyl thiodipropionate.

Another preferred embodiment of the invention is a composition comprising the fast radical scavenger 4,6-bis(octylthiomethyl)o-cresol blended with a long term stabilizer comprising a blend of ADK stab AO 23 and distearyl 3,3'-thiopropionate or ditridecyl thiodipropionate.

Another preferred embodiment of the invention is a composition comprising the fast radical scavenger 4,6-bis(octylthiomethyl)o-cresol blended with a long term stabilizer comprising 4,4'-bis(α,α-dimethylbenzyl) diphenylamine.

Another preferred embodiment of the invention is a composition comprising the fast radical scavenger 4,6-bis(octylthiomethyl)o-cresol blended with a long term stabilizer comprising a mixture of 4,4'-bis(α,α-dimethylbenzyl) diphenylamine and distearyl 3,3'-thiopropionate or ditridecyl thiodipropionate.

Another preferred embodiment of the invention is a composition comprising the fast radical scavenger 4,6-bis(octylthiomethyl)o-cresol blended with a long term stabilizer comprising a mixture of 4,4'-bis(α,α-dimethylbenzyl) diphenylamine and 2,2'-thiodiethylene bis[3(3,5-di-t-butyl-4-hydroxyphenyl)propionate].

Another preferred embodiment of the invention is a composition comprising the fast radical scavenger 4,6-bis(octylthiomethyl)o-cresol blended with a long term stabilizer comprising a mixture of 4,4'-bis(α,α-dimethylbenzyl) diphenylamine and ADK stab AO 23.

The present invention also includes the use of a stabilized peroxide cross-linked polyolefin composition as described herein as insulation media for medium and high voltage wire and cable. (For a description of a similar composition wherein the polyolefin is polyethylene, see EP 1074580 A2 and EP 0966000 A1.)

The organic peroxides useful as cross-linking agents are those well known in the art, e.g., dialkyl peroxides such as dicumyl peroxide. The load level range for the peroxide is usually 0.5 to 5% by weight. (For a description of such a peroxide, see EP 1074580 A2 and EP 0966000 A1.)

The antioxidant blend can be added to the polymer as separate components, or as a pre-mixed powder blend, or as a pre-mixed no-dust blend (prepared by any process known in the art), or as a pre-dispersed blend in a polymer masterbatch or as premixed liquid blend. (For a description of appropriate processing equipment, see EP 1074580 A2 and EP 0966000 A1.)

The blending of different types of antioxidants results in a tailor-made antioxidant system for peroxide cross-linked polyethylene having excellent scorch resistance, minimal peroxide interaction, sufficient long term properties to meet industry standards, a high solubility, and low melting behavior.

It is to be noted that some of the antioxidants mentioned as being suitable components for the present invention have multi-functional properties, for example:
(i) 4,6-bis(octylthiomethyl)o-cresol is classified for purposes of the invention as a fast radical scavenger because it is a low hindered phenol. However, it also contains sulphur, which contributes to the long term properties;
(ii) 2,2'-thiodiethylene bis[3,(3,5-di-t-butyl-4-hydroxyphenyl)propionate] is a highly hindered phenol that also contains sulphur. However, in this case both contribute mainly to the long term stabilizer properties.
(iii) The highly hindered phenols and thiosynergists are actually two different classes of antioxidants, but both exhibit the concept of the present invention in that they both contribute mainly to the long term stabilizer properties of the cross-linked polyethylene and somewhat to the anti-scorch property.

Taking the above into account, for purposes of the present invention, the fast radical scavengers can be regarded as anti-scorch agents, and the highly hindered phenols and thiosynergists can be regarded as having the main function of long term stabilizers (even though they might contribute somewhat to anti-scorch, as well).

Various features and aspects of the present invention are illustrated further in the examples that follow. While these examples are presented to show one skilled in the art how to operate within the scope of the invention, they are not intended in any way to serve as a limitation upon the scope of the invention.

### EXAMPLES

### Sample preparation

A low density polyethylene (PE) (d= 0923 g/cm³) of the type Exxon LD100MED powder is mixed together with the antioxidants and the peroxide (2%) in a high speed mixer to get a good pre-dispersion of the antioxidants. This mixture is then extruded carefully through a single screw extruder at 130°C (below the decomposition temperature of the peroxide) in order to melt-compound the additives. The extrudate is used for further testing. For the TBM-6, a masterbatch without peroxide was prepared first at a higher temperature (190°C), prior to compounding on the single screw extruder, in order to melt-blend the additive and obtain a good dispersion.

### Measuring scorch resistance

Scorch resistance has been measured by weighing of 42 grams of each compound (as prepared above) and stir melting it on a laboratory Brabender kneaded at an initial mass temperature of 135°C and 10 rpm. This is done to simulate cable extrusion conditions. The material is kneaded under a constant load of two kilograms for 30 minutes. The scorch time, t₅, is determined as the period in minutes between the minimum torque and an increase of 5Nm. The scorch time, t₁₀, is determined as the period in minutes between the minimum torque and an increase of 10Nm. A longer scorch time is a positive characteristic and indicates fewer problems related to premature cross-linking during cable extrusion.

### Measuring peroxide interaction

Five grams of each sample as prepared above is heated to 180°C in a Monsanto Moving Die Rheometer (MDR 2000E) at 0.5° torsion according to ISO 6502;1991, until the maximum torque is obtained. AS in Nm, which is the difference between the minimum and the maximum torque, is a measure of the cross-link density. As described in U.S. Patent No. 3,954,907, a higher value is better and corresponds to a higher cross-link density, meaning less interaction of the antioxidant system with the cross-linking reaction.

### Thermal aging

Tensile bars (dimensions according to ISO527-2) are punched from cross-linked plaques for aging at 150°C in an air circulating oven. Compression moulding and subsequent cross-linking is carried out at 170°C at 200 bars for 25 minutes. The tensile bars are evaluated for retained tensile strength at yield and elongation at break at seven and fourteen days of exposure at 150°C. The industry standard requires 75% retention of properties after two weeks of aging at 150°C.

### Blooming

Blooming tests are carried out on compression moulded non-cross-linked plaques in an air circulating oven at 55°C for one week. Plaques of 5 x 5 x 2.2 mm are compression moulded at 120°C for five minutes at 100 bars. Blooming is observed visually. The following ranking is made by visual observation: no bloom, light bloom, medium bloom, heavy bloom. The following examples illustrate the invention.

**GRLK-P173**

| Examples | 1 | 2 | 3 | 4 | 5 | 6 | 7 | 8 | 9 | 10 |
|---|---|---|---|---|---|---|---|---|---|---|
| Raw materials is percent by weight | | | | | | | | | | |
| LDPE | 97.6 | 97.8 | 97.7 | 97.7 | 97.6 | 97.5 | 97.6 | 97.4 | 97.6 | 97.6 |
| AO-1 | 0.2 | | | | | | 0.2 | 0.4 | 0.3 | |
| AO-2 | 0.2 | | | | | | | | | |
| AO-3 | | 0.2 | 0.3 | | | | | | | |
| AO-4 | | | | 0.3 | 0.4 | 0.5 | 0.2 | 0.2 | 0.1 | 0.2 |
| AO-5 | | | | | | | | | | |
| AO-6 | | | | | | | | | | |
| AO-7 | | | | | | | | | | 0.2 |
| AO-8 | | | | | | | | | | |
| t₅ at 135°C (minutes) | 7.8 | 10.2 | 11.4 | 11.6 | 14.9 | 17.8 | 10.7 | 12.1 | 10.8 | 10.7 |
| t₁₀ at 135°C (minutes) | 10.7 | 12.9 | 15.5 | | | | | | 17.1 | 19.6 |
| ΔS at 180°C (Nm) | 0.39 | 0.39 | 0.38 | 0.31 | 0.26 | 0.21 | 0.33 | 0.3 | 0.38 | 0.33 |
| % retained tensile strength, 1wk/150°C | 68 | 100 | 98 | 41 | 60 | 98 | 96 | 111 | 113 | 98 |
| % retained tensile strength, 2wk/150°C | 33 | 85 | 99 | 35 | 31 | 77 | 70 | 101 | 47 | 69 |
| % retained elongation at break, 1 wk/150°C | 55 | 100 | 99 | 10 | 60 | 92 | 95 | 106 | 100 | 99 |
| % retained elongation at break, 2 wk/150°C | 8 | 85 | 92 | 10 | 10 | 75 | 69 | 96 | 11 | 65 |
| Bloom at 55°C 11 days | Light | Severe | Severe | No | No | No | Light | Medium | Medium | No |
| Low melting ≤ 100°C | Yes | No | No | Yes | Yes | Yes | Yes | Yes | Yes | Yes |

| | | | | | | | | | | |
|---|---|---|---|---|---|---|---|---|---|---|
| AO-1 is 2,2'-thiodiethylene bis[3(3,5-di-t-butyl-4-hydroxyphenyl)propionate]. AO-2 is distearyl 3,3'-thiopropionate. AO-3 is 4,4'-thiobis(2-t-butyl-5-methylphenol). AO-4 is 4,6-bis(octylthiomethyl)o-cresol. AO-5 is ditridecyl thiodipropionate. AO-6 is 4,4'-bis(α,α-dimethylbenzyl) diphenylamine. AO-7 is ADK stab AO-23. | | | | | | | | | | |

AO-8 is a mixture of C₁₃-C₁₅ linear and branched esters of 3-3',5'-di-t-butyl-4'-hydroxyphenyl) propionic acid (Anox 1315).

4,4'-Thiobis(2-t-butyl-5-methylphenol) used as single antioxidant at 0.2-0.3%, which are typical load levels, has a very good balance of properties with regard to anti-scorch, minimal peroxide interaction, and long term stability. It meets the industry requirements of 75% retention of properties after two weeks aging at 150°C, but the antioxidant has poor compatibility with the LDPE resulting in blooming or plate-out. In addition, it has a high melting point, above the processing temperature of the cable. The 1:1 blend of 2,2'-thiodiethytene bis[3-(3,5-di-t-butyl-4-hydroxyphenyl)propionate] and distearyl 3,3'-thiopropionate is considered superior to 4,4'-thiobis(2-t-butyl-5-methylphenol). However, being more compatible and having a low melting point, it performs poorly in anti-scorch and provides a lower good long term stability.

4,6-Bis(octylthiomethyl)o-cresol used at 0.3 % is a good anti-scorch additive. It shows no blooming after 21 days, but provides definitely lower good long term stability. Higher load levels up to 0.5% do achieve much better retention of properties after two weeks of long term heat aging at 150°C, but this formulation suffers from a great deal of interaction with the peroxide (ΔS is low). Increasing peroxide load levels could be an option for improved properties, but is undesirable, as noted above. Thus, the balance of properties that can be achieved with 4,6-bis(octylthiomethyl)o-cresol, although being very good as an anti-scorch additive, is inadequate. Surprisingly, a better balance of properties can be achieved by blending 4,6-bis(octylthiomethyl)o-cresol with other molecules, such as a highly hindered phenol or an aromatic amine, with or without the addition of a thiosynergist, e.g., distearyl 3,3'-thiopropionate (DSTDP) or ditridecyl thiodipropionate (DTDTDP). This is unobvious owing to interactions between antioxidants that cannot be predicted.

## Claims

1. A composition comprising:
(a) at least one polyolefin;
(b) at least one organic peroxide; and
(c) an antioxidant mixture comprising:
(i) 100 to 5,000 ppm of at least one fast radical scavenger selected from the group consisting of α-tocopherol; 4,6-bis(octylthiomethyl) o-cresol and derivatives thereof; and mixtures thereof; and
(ii) 100 to 8,000 ppm of at least one long term stabilizer selected from the group consisting of 2,2'-thiodiethylene bis[3(3,5-di-t-butyl-4-hydroxyphenyl) propionate]; C₁₃-C₁₅ linear and branched alkyl esters of 3-(3',5'-di-t-butyl-4'-hydroxyphenyl) propionic acid; distearyl 3,3'-thiopropionate; 4,4'-bis(α,α-dimethylbenzyl) diphenylamine; ADK stab AO 23 ™ (CAS-Number 66534-05-2, 71982-66-6); and mixtures thereof.

2. The composition of claim 1 wherein the polyolefin comprises an ethylene polymer or copolymer.

3. The composition of claim 2 wherein the total level of the mixture of antioxidants is in the range 200 to 10,000 ppm.

4. The composition of claim 1 wherein the fast radical scavenger comprises 4,6-bis(octylthiomethyl)o-cresol or derivatives thereof.

5. The composition of claim 4 wherein the derivative is 2,4-bis(n-docecylthiomethyl)-6-methylphenol.

6. The composition of claim 2 wherein the fast radical scavenger comprises 4,6-bis(octylthiomethyl)o-cresol and the long term stabilizer comprises 2,2'-thiodiethylene bis[3(3,5-di-t-butyl-4-hydroxyphenyl)propionate].

7. The composition of claim 6 wherein the long term stabilizer further comprises distearyl 3,3'-thiopropionate.

8. The composition of claim 6 wherein the long term stabilizer further comprises ditridecyl thiodipropionate.

9. The composition of claim 2 wherein the fast radical scavenger comprises 4,6-bis(octylthiomethyl)o-cresol and the long term stabilizer comprises at least one C₁₃-C₁₅ linear or branched alkyl ester of 3-(3',5'-di-t-butyl-4'-hydroxyphenyl) propionic acid.

10. The composition of claim 9 wherein the long term stabilizer further comprises distearyl 3,3'-thiopropionate.

11. The composition of claim 9 wherein the long term stabilizer further comprises ditridecyl thiodipropionate

12. The composition of claim 2 wherein the fast radical scavenger comprises 4,6-bis(octylthiomethyl)o-cresol and the long term stabilizer comprises ADK stab AO 23™ (CAS-Number 66534-05-2, 71982-66-6).

13. The composition of claim 12 wherein the long term stabilizer further comprises distearyl 3,3'-thiopropionate.

14. The composition of claim 12 wherein the long term stabilizer further comprises ditridecyl thiodipropionate.

15. The composition of claim 2 wherein the fast radical scavenger comprises 4,6-bis(octylthiomethyl)o-cresol and the long term stabilizer comprises 4,4'-bis(α,α-dimethylbenzyl) diphenylamine.

16. The composition of claim 15 wherein the long term stabilizer further comprises distearyl 3,3'-thiopropionate.

17. The composition of claim 15 wherein the long term stabilizer further comprises ditridecyl thiodipropionate.

18. The composition of claim 1 wherein the fast radical scavenger is α-tocopherol and the long term stabilizer comprises a mixture of 2,2'-thiodiethylene bis[3(3,5-di-t-butyl-4-hydroxphenyl)propionate] and distearyl 3,3'-thiopropionate.

19. The composition of claim 1 wherein the organic peroxide is a dialkyl peroxide.

20. The composition of claim 1 wherein the organic peroxide is dicumyl peroxide.

21. An article of manufacture comprising insulating means comprising a composition comprising:
(a) at least one polyolefin;
(b) at least one organic peroxide; and
(c) an antioxidant mixture of
(i) 100 to 5,000 ppm of at least one fast radical scavenger selected from the group consisting of α-tocopherol; 4,6-bis(octylthiomethyl) o-cresol and derivatives thereof; and mixtures thereof; and
(ii) 100 to 8,000 ppm of at least one long term stabilizer selected from the group consisting of 2,2'-thiodiethylene bis[3(3,5-di-t-butyl-4-hydroxyphenyl) propionate]; C₁₃-C₁₅ linear and branched alkyl esters of 3-(3',5'-di-t-butyl-4'-hydroxyphenyl) propionic acid; distearyl 3,3'-thiopropionate; 4,4'-bis(α,α-dimethylbenzyl) diphenylamine; ADK stab AO 23 ™ (CAS-Number 66534-05-2, 71982-66-6); and mixtures thereof_{.}

22. The article of claim 21 wherein the polyolefin comprises an ethylene polymer or copolymer.

23. The article of claim 22 wherein said article is medium or high voltage wire and cable.

24. A method for stabilizing polyolefins for use as insulating media in medium and high voltage wire and cable comprising adding to said polyolefin:
at least one organic peroxide; and
an antioxidant mixture of
100 to 5,000 ppm of at least one fast radical scavenger selected from the group consisting of α-tocopherol; 4,6-bis(octylthiomethyl) o-cresol and derivatives thereof; and mixtures thereof; and
100 to 8,000 ppm of at least one long term stabilizer selected from the group consisting of 2,2'-thiodiethylene bis [3(3,5-di-t-butyl-4-hydroxyphenyl) propionate]; C₁₃-C₁₅ linear and branched alkyl esters of 3-(3',5'-di-t-butyl-4'-hydroxyphenyl) propionic acid; distearyl 3,3'-thiopropionate; 4,4'-bis(α,α-dimethylbenzyl) diphenylamine; ADK stab AO 23™ (CAS-Number 66534-05-2, 71982-66-6); and mixtures thereof.

25. The method of claim 24 wherein the polyolefin comprises an ethylene polymer or copolymer.

## Patentansprüche

1. Eine Zusammensetzung enthaltend:
(a) mindestens ein Polyolefin;
(b) mindestens ein organisches Peroxid und
(c) eine Antioxidansmischung enthaltend:
(i) 100 bis 5.000 ppm mindestens eines schnellen Radikalfängers ausgewählt aus der aus a-Tocopherol; 4,6-Bis(octylthiomethyl)o-cresol und Derivaten davon; und Mischungen davon bestehenden Gruppe; und
(ii) 100 bis 8.000 ppm mindestens eines Langzeitstabilisators ausgewählt aus der aus 2,2'-Thiodiethylenbis[3(3,5-di-t-butyl-4-hydroxyphenyl)propionat]; linearen und verzweigten C₁₃-C₁₅-Alkylester von 3-(3',5'-Di-t-butyl-4'-hydroxyphenyl) propionsäure; Distearyl-3,3'-thiopropionat; 4,4'-Bis(α,α-dimethylbenzyl)diphenylamin; ADK stab AO 23™ (CAS-Nummer 66534-05-2, 71982-66-6) und Mischungen davon bestehenden Gruppe.

2. Die Zusammensetzung des Anspruchs 1, worin das Polyolefin ein Ethylenpolymer oder -copolymer umfasst.

3. Die Zusammensetzung des Anspruchs 2, worin der Gesamtgehalt der Mischung von Antioxidantien im Bereich von 200 bis 10.000 ppm liegt.

4. Die Zusammensetzung des Anspruchs 1, worin der schnelle Radikalfänger 4,6-Bis(octylthiomethyl)o-cresol oder Derivate davon umfasst.

5. Die Zusammensetzung des Anspruchs 4, worin das Derivat 2,4-Bis(n-dodecylthiomethyl)-6-methylphenol ist.

6. Die Zusammensetzung des Anspruchs 2, worin der schnelle Radikalfänger 4,6-Bis(octylthiomethyl)o-cresol umfasst und der Langzeitstabilisator 2,2'-Thiodiethylenbis[3(3,5-di-t-butyl-4-hydroxyphenyl)propionat] umfasst.

7. Die Zusammensetzung des Anspruchs 6, worin der Langzeitstabilisator weiterhin Distearyl-3,3'-thiopropionat umfasst.

8. Die Zusammensetzung des Anspruchs 6, worin der Langzeitstabilisator weiterhin Ditridecylthiodipropionat umfasst.

9. Die Zusammensetzung des Anspruchs 2, worin der schnelle Radikalfänger 4,6-Bis(octylthiomethyl)o-cresol umfasst und der Langzeitstabilisator mindestens einen linearen oder verzweigten C₁₃-C₁₅-Alkylester von 3-(3',5'-Di-t-butyl-4'-hydroxyphenyl)propionsäure umfasst.

10. Die Zusammensetzung des Anspruchs 9, worin der Langzeitstabilisator weiterhin Distearyl-3,3'-thiopropionat umfasst.

11. Die Zusammensetzung des Anspruchs 9, worin der Langzeitstabilisator weiterhin Ditridecylthiodipropionat umfasst.

12. Die Zusammensetzung des Anspruchs 2, worin der schnelle Radikalfänger 4,6-Bis(octylthiomethyl)o-cresol umfasst und der Langzeitstabilisator ADK stab AO 23™ (CAS-Nummer 66534-05-2, 71982-66-6) umfasst.

13. Die Zusammensetzung des Anspruchs 12, worin der Langzeitstabilisator weiterhin Distearyl-3,3'-thiopropionat umfasst.

14. Die Zusammensetzung des Anspruchs 12, worin der Langzeitstabilisator weiterhin Ditridecylthiodipropionat umfasst.

15. Die Zusammensetzung des Anspruchs 2, worin der schnelle Radikalfänger 4,6-Bis-(octylthiomethyl)o-cresol umfasst und der Langzeitstabilisator 4,4'-Bis(α,α-dimethylbenzyl)diphenylamin umfasst.

16. Die Zusammensetzung des Anspruchs 15, worin der Langzeitstabilisator weiterhin Distearyl-3,3'-thiopropionat umfasst.

17. Die Zusammensetzung des Anspruchs 15, worin der Langzeitstabilisator weiterhin Ditridecylthiodipropionat umfasst.

18. Die Zusammensetzung des Anspruchs 1, worin der schnelle Radikalfänger a-Tocopherol ist und der Langzeitstabilisator eine Mischung von 2,2'-Thiodiethylenbis[3(3,5-di-t-butyl-4-hydroxyphenyl)propionat] und Distearyl-3,3'-thiopropionat umfasst.

19. Die Zusammensetzung des Anspruchs 1, worin das organische Peroxid ein Dialkylperoxid ist.

20. Die Zusammensetzung des Anspruchs 1, worin das organische Peroxid ein Dicumylperoxid ist.

21. Ein Herstellungsartikel enthaltend Isoliermittel enthaltend eine Zusammensetzung enthaltend:
(a) mindestens ein Polyolefin;
(b) mindestens ein organisches Peroxid und
(c) eine Antioxidansmischung aus
(i) 100 bis 5.000 ppm mindestens eines schnellen Radikalfängers ausgewählt aus der aus a-Tocopherol; 4,6-Bis(octylthiomethyl)o-cresol und Derivaten davon; und Mischungen davon bestehenden Gruppe; und
(ii) 100 bis 8.000 ppm mindestens eines Langzeitstabilisators ausgewählt aus der aus 2,2'-Thiodiethylenbis[3(3,5-di-t-butyl-4-hydroxyphenyl)propionat]; linearen und verzweigten C₁₃-C₁₅-Alkylestern von 3-(3',5'-Di-t-butyl-4'-hydroxyphenyl) propionsäure; Distearyl-3,3'-thiopropionat; 4,4'-Bis(α,α-dimethylbenzyl)diphenylamin; ADK stab AO 23™ (CAS-Nummer 66534-05-2, 71982-66-6) und Mischungen davon bestehenden Gruppe.

22. Der Artikel des Anspruchs 21, worin das Polyolefin ein Ethylenpolymer oder-copolymer umfasst.

23. Der Artikel des Anspruchs 22, worin besagter Artikel Mittel- oder Hochspannungsdraht und -kabel ist.

24. Eine Methode zur Stabilisierung von Polyolefinen zur Verwendung als Isolationsmedien in Mittel- und Hochspannungsdraht und -kabel enthalten die Zugabe von
mindestens einem organischen Peroxid und
einer Antioxidansmischung aus
100 bis 5.000 ppm mindestens eines schnellen Radikalfängers ausgewählt aus der aus a-Tocopherol; 4,6-Bis(octylthiomethyl)o-cresol und Derivaten davon; und Mischungen davon bestehenden Gruppe; und
100 bis 8.000 ppm mindestens eines Langzeitstabilisators ausgewählt aus der aus 2,2'-Thiodiethylenbis[3(3,5-di-t-butyl-4-hydroxyphenyl)propionat]; linearen und verzweigten C₁₃-C₁₅-Alkylestern von 3-(3',5'-di-t-butyl-4'-hydroxyphenyl) propionsäure; Distearyl-3,3'-thiopropionat; 4,4'-Bis(a,a-dimethylbenzyl)diphenylamin; ADK stab AO 23™ (CAS-Nummer 66534-05-2, 71982-66-6) und Mischungen davon bestehenden Gruppe zu besagtem Polyolefin.

25. Die Methode des Anspruchs 24, worin das Polyolefin ein Ethylenpolymer oder-copolymer umfasst.

## Revendications

1. Composition comprenant :
(a) au moins une polyoléfine ;
(b) au moins un peroxyde organique ; et
(c) un mélange d'anti-oxydants comprenant :
(i) 100 à 5 000 ppm d'au moins un piégeur rapide de radicaux choisi dans le groupe constitué par l'α-tocophérol ; le 4,6-bis(octylthiométhyl)o-crésol et ses dérivés ; et leurs mélanges ; et
(ii) 100 à 8 000 ppm d'au moins un stabilisant de longue durée, choisi dans le groupe constitué par le 2,2'-thiodiéthylène bis[3(3,5-di-t-butyl-4-hydroxyphényl)propionate] ; les esters d'alkyle linéaires et ramifiés en C₁₃-C₁₅ de l'acide 3-(3',5'-di-t-butyl-4'-hydroxyphényl)propionique ; le distéaryl 3,3'-thiopropionate ; la 4,4'-bis(α,α-diméthylbenzyl) diphénylamine ; l'ADK stab AO 23™ (CAS numéro 66534-05-2, 71982-66-6) ; et leurs mélanges.

2. Composition selon la revendication 1, dans laquelle la polyoléfine comprend un polymère ou copolymère de l'éthylène.

3. Composition selon la revendication 2, dans laquelle le taux total du mélange d'anti-oxydants se situe dans la plage de 200 à 10 000 ppm.

4. Composition selon la revendication 1, dans laquelle le piégeur rapide de radicaux comprend le 4,6-bis(octylthiométhyl)o-crésol ou ses dérivés.

5. Composition selon la revendication 4, dans laquelle le dérivé est le 2,4-bis(n-dodécylthiométhyl)-6-méthylphénol.

6. Composition selon la revendication 2, dans laquelle le piégeur rapide de radicaux comprend le 4,6-bis(octylthiométhyl)o-crésol, et le stabilisant de longue durée comprend le 2,2'-thiodiéthylène bis[3(3,5-di-t-butyl-4-hydroxyphényl)propionate].

7. Composition selon la revendication 6 dans laquelle le stabilisant de longue durée comprend en outre le distéaryl 3,3'-thiopropionate.

8. Composition selon la revendication 6, dans laquelle le stabilisant de longue durée comprend en outre le ditridécyl thiodipropionate.

9. Composition selon la revendication 2, dans laquelle le piégeur rapide de radicaux comprend le 4,6-bis(octylthiométhyl)o-crésol et le stabilisant de longue durée comprend au moins un ester d'alkyle linéaire ou ramifié en C₁₃-C₁₅ de l'acide 3-(3',5'-di-t-butyl-4'-hydroxyphényl)propionique.

10. Composition selon la revendication 9, dans laquelle le stabilisant de longue durée comprend en outre le distéaryl 3,3'-thiopropionate.

11. Composition selon la revendication 9, dans laquelle le stabilisant de longue durée comprend en outre le tridécyl thiodipropionate.

12. Composition selon la revendication 2, dans laquelle le piégeur rapide de radicaux comprend le 4,6-bis(octylthiométhyl)o-crésol et le stabilisant de longue durée comprend ADK stab AO 23^{™} (CAS numéro 66534-05-2, 71982-66-6).

13. Composition selon la revendication 12, dans laquelle le stabilisant de longue durée comprend en outre le distéaryl 3,3'-thiopropionate.

14. Composition selon la revendication 12, dans laquelle le stabilisant de longue durée comprend en outre le ditridécyl thiodipropionate.

15. Composition selon la revendication 2, dans laquelle le piégeur rapide de radicaux comprend le 4,6-bis(octylthiométhyl)o-crésol et le stabilisant de longue durée comprend la 4,4'-bis(α,α-diméthylbenzyl) diphénylamine.

16. Composition selon la revendication 15, dans laquelle le stabilisant de longue durée comprend en outre le distéaryl 3,3'-thiopropionate.

17. Composition selon la revendication 15, dans laquelle le stabilisant de longue durée comprend en outre le ditridécyl thiodipropionate.

18. Composition selon la revendication 1, dans laquelle le piégeur rapide de radicaux est l'α-tocophérol et le stabilisant de longue durée comprend un mélange de 2,2'-thiodiéthylène bis[3(3,5-di-t-butyl-4-hydroxyphényl)propionate] et de distéaryl 3,3'-thiopropionate.

19. Composition selon la revendication 1, dans laquelle le peroxyde organique est un peroxyde de dialkyle.

20. Composition selon la revendication 1, dans laquelle le peroxyde organique est le peroxyde de dicumyle.

21. Article de fabrication comprenant des moyens d'isolation comprenant une composition comprenant :
(a) au moins une polyoléfine ;
(b) au moins un peroxyde organique ; et
(c) un mélange d'anti-oxydants comprenant :
(i) 100 à 5 000 ppm d'au moins un piégeur rapide de radicaux choisi dans le groupe constitué par l'α-tocophérol ; le 4,6-bis(octylthiométhyl)o-crésol et ses dérivés ; et leurs mélanges ; et
(ii) 100 à 8 000 ppm d'au moins un stabilisant de longue durée choisi dans le groupe constitué par le 2,2'-thiodiéthylène bis[3(3,5-di-t-butyl-4-hydroxyphényl)propionate] ; les esters d'alkyle linéaires et ramifiés en C₁₃-C₁₅ de l'acide 3-(3',5'-di-t-butyl-4'-hydroxyphényl)propionique ; le distéaryl 3,3'-thiopropionate ; la 4,4'-bis(α,α-diméthylbenzyl) diphénylamine ; l'ADK stab AO 23™ (CAS numéro 66534-05-2, 71982-66-6) ; et leurs mélanges.

22. Article selon la revendication 21, dans lequel la polyoléfine comprend un polymère ou copolymère de l'éthylène.

23. Article selon la revendication 22, dans lequel ledit article est un fil et câble moyenne ou haute tension.

24. Procédé de stabilisation de polyoléfines destinées à être utilisées comme moyens d'isolation dans un fil et câble moyenne et haute tension, comprenant l'addition à ladite polyoléfine :
d'au moins un peroxyde organique ; et
d'un mélange d'anti-oxydants de
100 à 5 000 ppm d'au moins un piégeur rapide de radicaux choisi dans le groupe constitué par l'a-tocophérol ; le 4,6-bis(octylthiométhyl)o-crésol et ses dérivés ; et leurs mélanges ; et
100 à 8 000 ppm d'au moins un stabilisant de longue durée choisi dans le groupe constitué par le 2,2'-thiodiéthylène bis[3(3,5-di-t-butyl-4-hydroxyphényl)propionate] ; les esters d'alkyle linéaires et ramifiés en C₁₃-C₁₅ de l'acide 3-(3',5'-di-t-butyl-4'-hydroxyphényl)propionique ; le distéaryl 3,3'-thiopropionate ; la 4,4'-bis(α,α-diméthylbenzyl) diphénylamine ; l'ADK stab AO 23™ (CAS numéro 66534-05-2, 71982-66-6) ; et leurs mélanges.

25. Procédé selon la revendication 24, dans lequel la polyoléfine comprend un polymère ou copolymère de l'éthylène.
